# EUROPEAN PATENT APPLICATION

(11) **EP 4 122 361 A1**
(43) Date of publication of application: **25.01.2023**
(21) Application number: 21931813.6
(22) Date of filing: 02.08.2021
(51) Int. Cl.: A47J 27/086, A47J 27/00, A47J 43/046, A47J 43/07, A47J 36/32

(54) **COOKING APPARATUS**

(30) Priority: 16.03.2021 KR 20210033901
(71) Applicant: Shinstarr Presents Corp., Mapo-gu, Seoul 04040 (KR)
(72) Inventor: LEE, Sangrok, Seoul 05103 (KR); LA, Koangkyun, Seoul 04040 (KR)
(74) Representative: btb IP Bungartz Baltzer Partnerschaft mbB Patentanwälte
(86) International application number: PCT/KR2021/010042
(87) International publication number: WO 2022/196870

(57) **Abstract**

Proposed is a cooking apparatus. The cooking apparatus of the present disclosure may include: an inner portion in which a food is contained and heated; an outer portion installed in a shape that surrounds an outside of the inner portion; a heating portion configured to heat the inner portion by using electrical energy; a housing portion installed in a shape that surrounds both the heating portion and the outer portion; a first driving portion positioned between the outer portion and the housing portion, and configured to rotate the inner portion in a first direction; a second driving portion positioned outside the housing portion and configured to rotate the housing portion in a second direction; and a container support stand in which the food contained in the inner portion is discharged and contained when the cooking of the food is completed.

## Description

### Technical Field

The present disclosure relates to a cooking apparatus. More particularly, the present disclosure relates to a cooking apparatus that is configured to heat and stir-fry food.

### Background Art

In general, stir-fried food, such as stir-fried spicy pork, stir-fried webfoot octopus, stir-fried rice, etc., is prepared in a stir-frying manner where various ingredients are mixed together and are placed in a cooking container such as a frying pan, a pot, or the like, and then appropriately stir-fried while heating and stirring for a predetermined time.

In particular, in order to prepare stir-fried food using meat, such as beef, pork, poultry, etc., and various by-products, and also various seafoods such as webfoot octopus, long arm octopus, squid, etc., to be tasty, uniform heat should be evenly applied to food ingredients. For achieving this, a chef should continuously perform mixing of the ingredients for stir-fried food in front of a cooking table.

For example, when a chef grabs a handle of a pan and pulls with a small radius snap, then pushes and raises the pan, food ingredients accommodated at a bottom surface of the pan will rise quickly around an inner circumference of the pan and then flip over again to the bottom surface of the pan. In a similar manner, when the chef grabs the handle of the pan and pushes with a small radius snap, then pulls and raises the pan, the food ingredients accommodated at the bottom surface of the pan will rise quickly around the inner circumference of the pan and then flip over again to the bottom surface of the pan. By performing these repetitive movements, stir-fry cooking is performed.

However, in order for the chef to flip the food ingredients by using the pan, a snap of a wrist has to be performed, and there is a problem in that strain on a wrist joint or an arm joint occurs due to repeating of the repetitive snap movement.

In addition, since one chef may only prepare one food at once, it is difficult to prepare a large amount of foods or different types of stir-fried foods at the same time. Therefore, there is a need for solving these problems.

The related art of the present disclosure is disclosed in Korean Patent Application Publication No. 10-2019-0130084 (published on November 21, 2019 and entitled: Apparatus for roast cook).

### Disclosure

### Technical Problem

An objective of the present disclosure is to provide a cooking apparatus capable of automatically cooking a stir-fried food.

In addition, another objective of the present disclosure is to provide a cooking apparatus capable of mixing and stir-frying a food in various manners, and is also to provide a function that a completely cooked food is automatically discharged.

The objectives of the present disclosure are not limited to the objectives mentioned above, and other objectives and advantages of the present disclosure can be understood from the descriptions below and can be more clearly understood from the embodiments of the present disclosure. In addition, it should be easily appreciated that the objectives and advantages of the present disclosure may be achieved from the elements disclosed in the claims and combinations thereof.

### Technical Solution

A cooking apparatus according to the present disclosure may include: an inner portion in which a food is contained and heated; an outer portion installed in a shape that surrounds an outside of the inner portion; a heating portion configured to heat the inner portion by using electrical energy; a housing portion installed in a shape that surrounds both the heating portion and the outer portion; a first driving portion positioned between the outer portion and the housing portion, and configured to rotate the inner portion in a first direction; a second driving portion positioned outside the housing portion and configured to rotate the housing portion in a second direction; and a container support stand in which the food contained in the inner portion is discharged and contained when the cooking of the food is completed.

In addition, the cooking apparatus may further include a central processing unit configured to control a driving of the cooking apparatus and to control a movement of the container support stand, wherein, when the cooking of the food is finished, the central processing unit finishes an algorithm of performing a stir-fry cooking and performs an algorithm of discharging the food that is food that has been cooked and contained in the inner portion.

In addition, the cooking apparatus may further include an elevating portion, and the elevating portion may include: an elevating body positioned at a lower side of the inner support portion and configured to generate power; and a rod member that protrudes to an upper side of the elevating body and is connected to the inner support portion, and configured to be moved in a vertical direction by a movement of the elevating body, wherein, when the algorithm of discharging the food is performed by the central processing unit, the elevating portion raises the housing portion.

In addition, the second driving portion may include: a second motor member installed in a position spaced apart from the housing portion, and configured to convert electrical energy to rotational power; and a power transmitting portion connecting a second output shaft to the housing portion, wherein the housing portion that receives the rotational power of the second motor member is rotated in the second direction, wherein, when the algorithm of discharging the food is performed by the central processing unit, the second driving portion rotates the housing portion so that the housing portion faces a position to which the completely cooked food is discharged.

In addition, when the housing portion is in an inclined state such that the food is discharged, a diameter L of the container support stand may be longer than a distance between a line projecting vertically downward from an end portion of a lower inner side surface of the housing portion and a line projecting vertically downward from an end portion of a center portion of the housing portion.

In addition, when performing of the algorithm of discharging the food that is food that has been cooked and contained in the inner portion is finished, cleaning of the inner portion of the cooking apparatus may be performed.

### Advantageous Effects

According to the cooking apparatus of the present disclosure, a rotation and an inclination angle of the inner portion of the cooking apparatus are capable of being adjusted by using the first driving portion and the second driving portion, and both time and cost for preparing a food may be reduced since the food is automatically heated by both the heating portion and the direct-firing portion.

In addition, the food is easily mixed by the first stirring portion and the second stirring portion, and the inclination angle of the inner portion is adjusted by the second driving portion, so that various tastes of the food may be prepared since the food is mixed and stir-fried in various manners.

In addition, when cooking of the food is completed, the food accommodated in the inner portion may be automatically discharged.

In addition, since cleaning of the inner portion is automatically performed by the injecting portion, time and cost required to clean the inner portion may be reduced.

In addition to the effects as described above, specific effects in accordance with the present disclosure will be described together with the detailed description for carrying out the present disclosure.

### Description of Drawings

FIG. 1 is a perspective view schematically illustrating a configuration of a cooking apparatus according to an embodiment of the present disclosure.
FIG. 2 is a perspective view illustrating a state in which a first stirring portion and a second stirring portion according to an embodiment of the present disclosure are installed.
FIG. 3 is an exploded perspective view illustrating the cooking apparatus according to an embodiment of the present disclosure.
FIG. 4 is a perspective view separately illustrating an inner portion, an outer portion, and a housing portion according to an embodiment of the present disclosure.
FIG. 5 is a perspective view illustrating a direct-firing portion according to an embodiment of the present disclosure.
FIG. 6 is a perspective view illustrating an outside of a second driving portion according to an embodiment of the present disclosure.
FIG. 7 is an exploded perspective view illustrating the second driving portion according to an embodiment of the present disclosure.
FIG. 8 is a perspective view illustrating a state in which a driving case according to an embodiment of the present disclosure is vertically separated.
FIG. 9 is a perspective view illustrating a receiving portion according to an embodiment of the present disclosure.
FIG. 10 is a cross-sectional view illustrating the cooking apparatus according to an embodiment of the present disclosure.
FIG. 11 is a cross-sectional view illustrating a state in which the inner portion is moved upward according to an embodiment of the present disclosure.
FIG. 12 is a cross-sectional view illustrating a state in which the inner portion is cleaned according to an embodiment of the present disclosure.
FIG. 13 shows plan views of rotating states of the inner portion formed in an oval shape according to another embodiment of the present disclosure.
FIG. 14 shows plan views of the inner portion formed with a plurality of protruding portions according to yet another embodiment of the present disclosure.
FIG. 15 is a block diagram illustrating a control configuration diagram of the present disclosure.
FIG. 16 is a flowchart illustrating a method of automatically discharging a cooked food from the cooking apparatus.
FIGS. 17 is perspective view illustrating that the housing portion and a container support stand that are included in the cooking apparatus are actually moved according to the flowchart in FIG. 16.
FIGS. 18 is side view illustrating that the housing portion and a container support stand that are included in the cooking apparatus are actually moved according to the flowchart in FIG. 16.
FIG. 19 is a side view illustrating a position to which a completely cooked food is discharged.
FIG. 20 is a side view illustrating the cooking apparatus after discharging of the completely cooked food is finished.
FIG. 21 is a view illustrating a size range of the container support stand according to an embodiment of the present disclosure.
FIG. 22 is a view illustrating a horizontal moving portion that is configured to horizontally move the container support stand.
FIG. 23 is a view illustrating an inner container according to an embodiment of the present disclosure.

### [Description of Reference Numerals]

1: Cooking apparatus
10, 200: Inner portion 11: Base member
20: Outer portion 25: Housing portion
26: Housing body 27: Housing cover
28: Fixed support portion 30: First driving portion
31: First motor member 32: First output shaft
40: Second driving portion 41: Second motor member
42: Second output shaft 43: Power transmitting portion
44: Target measurement member 45: Sensor member
46: Inner support portion 47: Elevating portion
48: Elevating body 49: Rod member
50: Driving case 60: First stirring portion
61: Fixing bracket 62: Rectilinear portion
63: Curved portion 70: Second stirring portion
71: Core member 72: Fixing member
80: Heating portion 81: Induction wire
90: Receiving portion 91: Body portion
92: Water collecting portion 93: Injecting portion
94: Water draining portion 100: Direct-firing portion
101: Direct-firing pipeline 102: Valve portion
103: Nozzle portion 104: Direct-firing base portion
110: Horizontal moving portion 112: Connecting arm
120: Container support stand 121: Inner container
250: Central processing unit 255: Memory portion
300: Food
D: Longitudinal direction (vertical direction)
A1: First direction L1: First imaginary line
A2: Second direction L2: Second imaginary line

### Mode for Invention

The above-mentioned objectives, features, and advantages will be described in detail with reference to the accompanying drawings, and accordingly, those of ordinary skill in the art to which the present disclosure pertains should be able to easily practice the technical idea of the present disclosure. In describing the present disclosure, when detailed description of known art related to the present disclosure is deemed as having a possibility of unnecessarily obscuring the gist of the present disclosure, the detailed description will be omitted. Hereinafter, exemplary embodiments according to the present disclosure will be described in detail with reference to the accompanying drawings. Like reference numerals in the drawings refer to like or similar elements throughout.

Terms such as first and second are used to describe various elements, but the elements are of course not limited by the terms. The terms are merely used for distinguishing one element from another element, and a first element may also be a second element unless particularly described otherwise.

Hereinafter, when it is said that an arbitrary element is disposed at "an upper portion (or a lower portion)" of an element or disposed "above (or below)" an element, this may not only mean that the arbitrary element is disposed in contact with an upper surface (or a lower surface) of the element, but also mean that another element may be interposed between the element and the arbitrary element disposed above (or below) the element.

Also, when it is said that a certain element is "connected" or "coupled" to another element, this may mean that the elements are directly connected or coupled to each other, but it should be understood that another element may be "interposed" between the elements or the elements may be "connected" or "coupled" to each other via another element.

Through the specification, each element may be singular or plural unless particularly described otherwise.

A singular expression used herein encompasses a plural expression unless the context clearly indicates otherwise. In the present application, terms such as "consisting of" or "including" should not be interpreted as necessarily including all of various elements or various steps described herein and should be interpreted as indicating that some of the elements or some of the steps may not be included or additional elements or steps may be further included.

Throughout the specification, "A and/or B" may refer to A, B, or A and B unless particularly described otherwise, and "C to D" refers to C or more and D or less unless particularly described otherwise.

Hereinafter, a cooking apparatus according to an embodiment of the present disclosure will be explained.

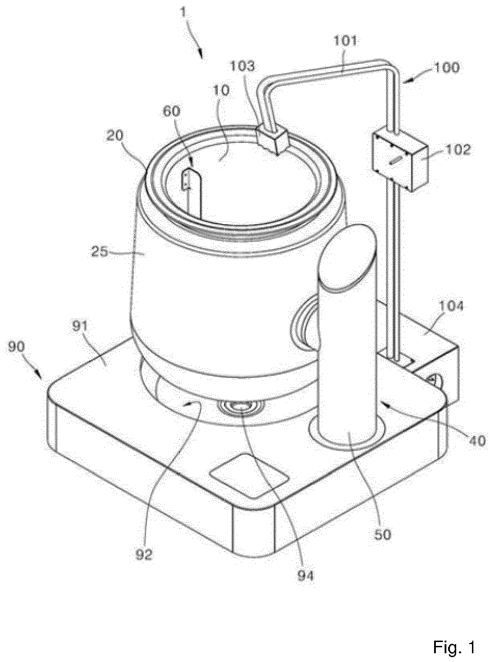

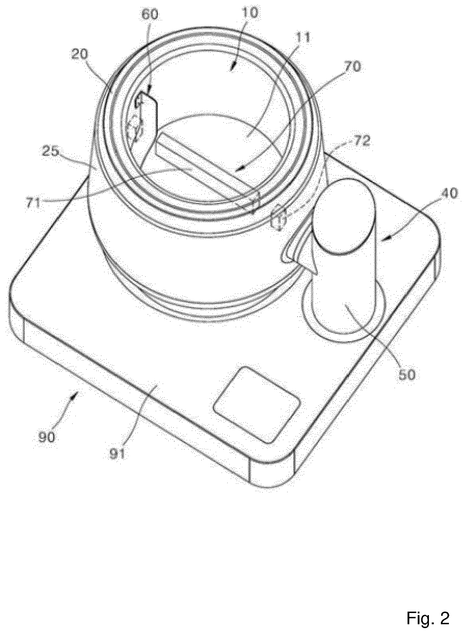

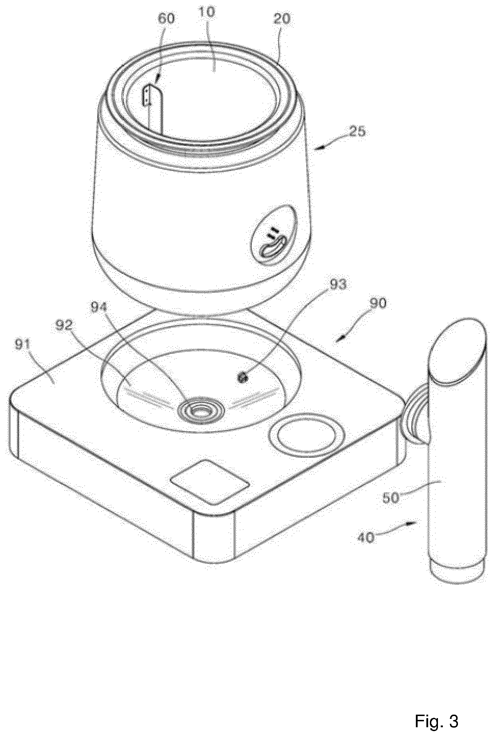

FIG. 1 is a perspective view schematically illustrating a configuration of a cooking apparatus 1 according to an embodiment of the present disclosure. FIG. 2 is a perspective view illustrating a state in which a first stirring portion 60 and a second stirring portion 70 according to an embodiment of the present disclosure are installed. FIG. 3 is an exploded perspective view illustrating the cooking apparatus 1 according to an embodiment of the present disclosure.

As illustrated in FIGS. 1 to 3, the cooking apparatus 1 according to an embodiment of the present disclosure includes an inner portion 10, an outer portion 20, a housing portion 25, a first driving portion 30, a second driving portion 40, a first stirring portion 60, a second stirring portion 70, a heating portion 80, a receiving portion 90, and a direct-firing portion 100.

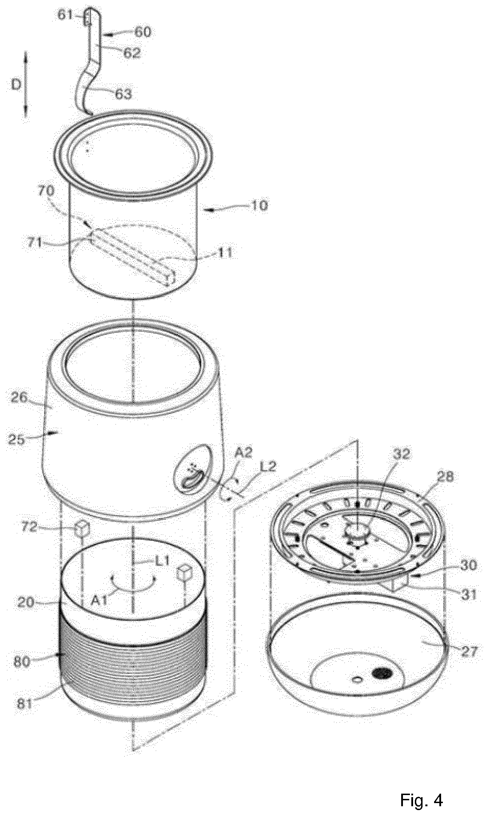

FIG. 4 is a perspective view separately illustrating the inner portion 10, the outer portion 20, and the housing portion 25 according to an embodiment of the present disclosure.

As illustrated in FIGS. 1 to 4, a food 300 is accommodated inside the inner portion 10, and the inner portion 10 may be variously modified within the technical idea of being heated by an external heat source. The inner portion 10 according to an embodiment of the present disclosure has an upper side opened, and the food 300 is accommodated inside the inner portion 10. In addition, a base member 11 formed in a circular plate shape is positioned at a bottom surface of the inner portion 10.

The outer portion 20 is installed in a shape that surrounds an outside of the inner portion 10. In addition, the outer portion 20 is positioned at a lower side of the inner portion 10, and an inner diameter of the outer portion 20 is larger than an outer diameter of the inner portion 10. The outer portion 20 also has a shape wherein an upper side of the outer portion 20 is opened. A stir-frying container according to the present disclosure has a dual structure. A reinforced plastic is used as a material of the outer portion 20, and SUS430 ferromagnetic material may be included in a material of the inner portion 10. Therefore, the inner portion 10 is heated by an induction coil that is installed along a circumference of the outer portion 20.

The housing portion 25 may be variously modified within the technical idea in which the housing portion 25 is installed in a shape that surrounds both the heating portion 80 and the outer portion 20. The housing portion 25 according to an embodiment of the present disclosure includes a housing body 26, a housing cover 27, and a fixed support portion 28. The housing body 26 has a shape that surrounds the outer portion 20, and has a shape wherein an upper side and a lower side of the housing body 26 are opened.

The housing cover 27 is installed in a shape that covers a lower side of the housing body 26. The housing cover 27 is installed in a shape that is concaved downwardly, and is fixed to the lower side of the housing body 26.

The fixed support portion 28 is positioned between the housing portion 25 and the housing cover 27, and the first driving portion 30 is mounted at the fixed support portion 28. The fixed support portion 28, which is positioned at an upper side of the housing cover 27, is fixed to the lower side of the housing body 26.

The first driving portion 30 is positioned between the outer portion 20 and the housing portion 25, and the first driving portion 30 may be variously modified within the technical idea of rotating the inner portion 10 in a first direction A1. The first driving portion 30 according to an embodiment of the present disclosure may include: a first motor member 31 fixed to the housing portion 25 facing the outer portion 20, and configured to convert electrical energy to rotational power; and a first output shaft 32 protruding from the first motor member 31 and fixed to the base member 11 of the inner portion 10.

The first output shaft 32 of the first motor member 31 is connected to a rotation center of the inner portion 10 and is configured to rotate the inner portion 10 in the first direction A1. The first motor member 31 is fixed to a lower side of the fixed support portion 28, and the first output shaft 32 extends to an upper side of the fixed support portion 28 and is fixed to a lower side of the base member 11. Therefore, the inner portion 10 is rotated by a rotation of the first output shaft 32. A connection between the inner portion 10 and the first output shaft 32 may be performed in a fitting manner. As necessary, the connection between the inner portion 10 and the first output shaft 32 may be performed in variously modified manners such as bolting, welding, and so on.

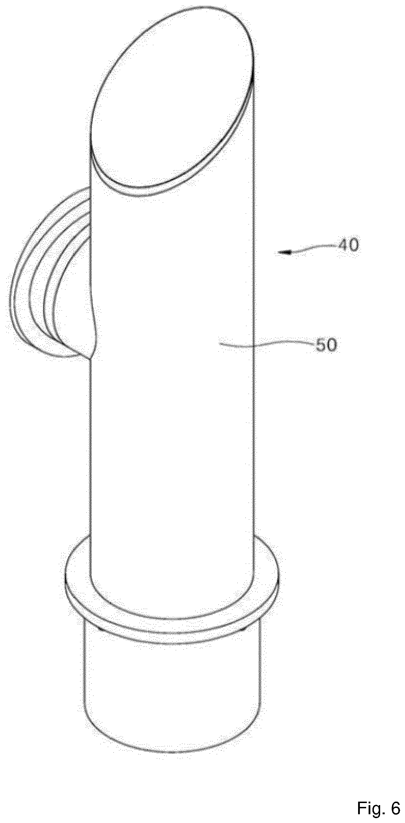

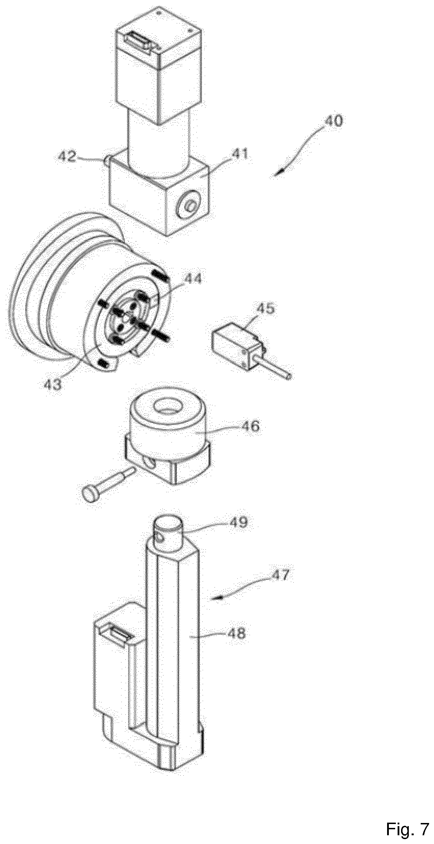

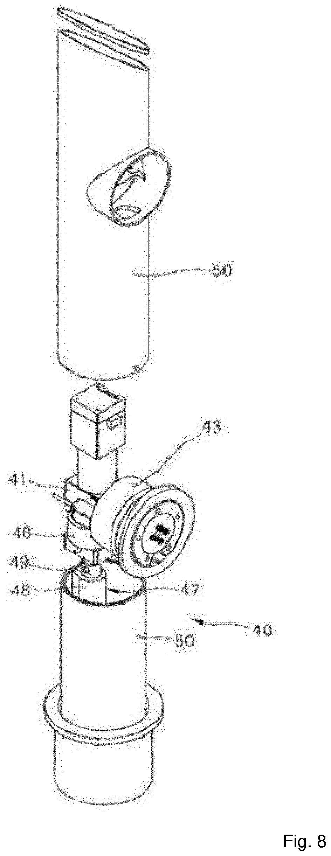

FIG. 6 is a perspective view illustrating an outside of the second driving portion 40 according to an embodiment of the present disclosure. FIG. 7 is an exploded perspective view illustrating the second driving portion 40 according to an embodiment of the present disclosure. FIG. 8 is a perspective view illustrating a state in which a driving case 50 according to an embodiment of the present disclosure is vertically separated.

As illustrated in FIGS. 6 to 8, the second driving portion 40 is positioned at an outside of the housing portion 25, and the second driving portion 40 may be variously modified within the technical idea of rotating the housing portion 25 in a second direction A2. The second driving portion 40 according to an embodiment of the present disclosure may include a second motor member 41, a second output shaft 42, a power transmitting portion 43, a target measurement member 44, a sensor member 45, an inner support portion 46, an elevating portion 47, and the driving case 50.

By the second motor member 41 that uses a stepping motor, an inclination of the inner portion 10 is capable of being controlled. When a system of the cooking apparatus 1 is operated, the second driving portion 40 is operated so that the inner portion 10 is positioned to be in a vertical direction. Since the second motor member 41, which is the stepping motor, is operated and adjusts the inclination of the housing portion 25, the inner portion 10 and the outer portion 20 that are positioned inside the housing portion 25 are rotated together with the housing portion 25.

The second motor member 41 is installed at a position spaced apart from the housing portion 25, and various types of motors may be used within the technical idea of converting electrical energy to rotational power. The stepping motor is used as the second motor member 41 according to an embodiment of the present disclosure. Moreover, a servo motor may be used as the second motor member 41.

The power transmitting portion 43 may be variously modified within the technical idea of connecting the second output shaft 42 of the second motor member 41 to the housing portion 25. The power transmitting portion 43 according to an embodiment of the present disclosure extends in a horizontal direction, and has a first side fixed to the outside of the housing portion 25 and has a second side connected to the second output shaft 42 of the second motor member 41. Therefore, the housing portion 25, which receives power of the second motor member 41, may be rotated in the second direction A2.

The target measurement member 44 is fixed to the power transmitting portion 43, and is a metal piece that is rotated together with the power transmitting portion 43. In addition, the sensor member 45 is installed at a position facing a movement path of the target measurement member 44, and is configured to detect a movement of the target measurement member 44 in a noncontact manner.

The inner portion 10, which corresponds to the stir-fry container, rotates together with the housing portion 25, and the housing portion 25 rotates together with the power transmitting portion 43. In addition, the target measurement member 44 installed at the power transmitting portion 43 also rotates together with the power transmitting portion 43 so that the inner portion 10 and the target measurement member 44 rotate together. The inner portion 10 is installed in the vertical direction that is an initialization position, and the target measurement member 44 is positioned facing the sensor member 45 when an entrance of the inner portion 10 is installed in an upward direction. Therefore, the sensor member 45 detects the movement of the target measurement member 44 and allows the inner portion 10 to be in a stopped state.

The inner support portion 46 supports the second motor member 41, and may be moved in the vertical direction together with the second motor member 41. The inner support portion 46 is positioned at a lower portion of the second motor member 41, and the second motor member 41 is fixed to an upper side of the inner support portion 46.

The elevating portion 47 may be variously modified within the technical idea of raising and lowering the inner support portion 46. The elevating portion 47 according to an embodiment of the present disclosure may include: an elevating body 48 positioned at a lower side of the inner support portion 46 and configured to generate power; and a rod member 49 protruding to an upper side of the elevating body 48 and connected to the inner support portion 46, and configured to be moved in the vertical direction by a movement of the elevating body 48.

By being supplied with hydraulic pressure or pneumatic pressure, the elevating body 48 may supply the power to move in the vertical direction. Alternatively, a motor is installed inside the elevating body 48, and is capable of moving the rod member 49 in the vertical direction by a plurality of gears that transmits power of the motor.

The rod member 49 has a bar shape that extends in the vertical direction, and the upper side of the rod member 49 is connected to the inner support portion 46.

As illustrated in FIG. 4, the first direction A1 in the present disclosure is a direction in which the inner portion 10 is rotated around a first imaginary line L1 that extends in a longitudinal direction D of the inner portion 10, and a second direction A2 is a direction in which the housing portion 25 is rotated around a second imaginary line L2 that extends to a side surface of the housing portion 25. The inner portion 10 is rotated along the first direction A1, and rotates the food 300 existing inside the inner portion 10. In addition, an inclination angle of the inner portion 10 is adjusted along the second direction A2 so that the food 300 may be stir-fried in various manners. In addition, when the inner portion 10, which is rotated in the second direction A2, is in a state of being upside down, cleaning of the inner portion 10 may be performed or the food 300 may be contained in another container.

The first stirring portion 60 is fixed to the inside of the inner portion 10 and is rotated together with the inner portion 10, and the first stirring portion 60 may be variously modified within the technical idea of stirring the food 300. The first stirring portion 60 protrudes to the inside of the inner portion 10, and may extends in the longitudinal direction D of the inner portion 10.

The first stirring portion 60 according to an embodiment of the present disclosure includes: a fixing bracket 61 fixed to an inside surface of the inner portion 10; a rectilinear portion 62 that extends from the fixing bracket 61 and extends toward the inside of the inner portion 10; and a curved portion 63 that extends from the rectilinear portion 62 and forms a curved surface. Since the curved portion 63 in contact with the food 300 is concavely formed, the food 300 contained in the inner portion 10 may be easily stirred.

The second stirring portion 70 is installed in a direction intersecting with the first stirring portion 60, and is positioned at the base member 11 of the inner portion 10. In addition, the second stirring portion 70 stirs the food 300 together with the first stirring portion 60, and the second stirring portion 70 may be variously modified within the technical idea of being in a state in which the second stirring portion 70 maintains a fixed state and is not with the outer portion 20. The second stirring portion 70 according to an embodiment of the present disclosure may include: a core member 71 positioned at an upper side of the base member 11 and provided with magnetic poles at both sides thereof; and a fixing member 72 fixed to the inside of the housing portion 25 facing the core member 71 and provided with opposite magnetic poles. In addition, when the inner portion 10 is rotated, a rotation of the core member 71 may be restrained by the fixing member 72.

In addition, when the core member 71, which uses a magnet, is in a state of being in contact with the base member 11 of the inner portion 10, the core member 71 maintains a state in which the rotation of the core member 71 is restrained, and also when the food 300 is discharged, the core member 71 having a bar shape is blocked from moving outside of the inner portion 10. If the core member 71 has a weak fixation power, a separate electromagnet may be additionally installed.

A permanent magnet may be used as the fixing member 72, and an electromagnet may be used as necessary. The core member 71 is attached by magnetic force. The fixing member 72 that is fixed to the inside of the outer portion 20 has the magnetic poles that are opposite to a polarity of the core member 71. Therefore, the core member 71 positioned at the inside of the inner portion 10 is fixed in a predetermined direction by magnetism.

When the inner portion 10 is rotated, the food 300 existing at the inside of the inner portion 10 rotates, and since the core member 71 that is a magnetic bar is fixed, the core member 71 evenly mixes the food 300.

As the magnet used for the core member 71 and the fixing member 72, a neodymium magnet, a samarium-cobalt magnet, or an alnico magnet may be used. Additionally, a solenoid electromagnet may be used.

In the present disclosure, by using the first stirring portion 60 and the second stirring portion 70, the food 300 may be rapidly and easily mixed. The food 300 is stirred by a double action of the first stirring portion 60 and the second stirring portion 70.

The heating portion 80 may be variously modified within the technical idea of using electrical energy to heat the inner portion 10. The heating portion 80 according to an embodiment of the present disclosure may include an induction wire 81 that is installed in a shape that surrounds the outside of the outer portion 20. When the induction wire 81 is operated, the inner portion 10 is heated by eddy currents generated by magnetic induction so that the food 300 is heated.

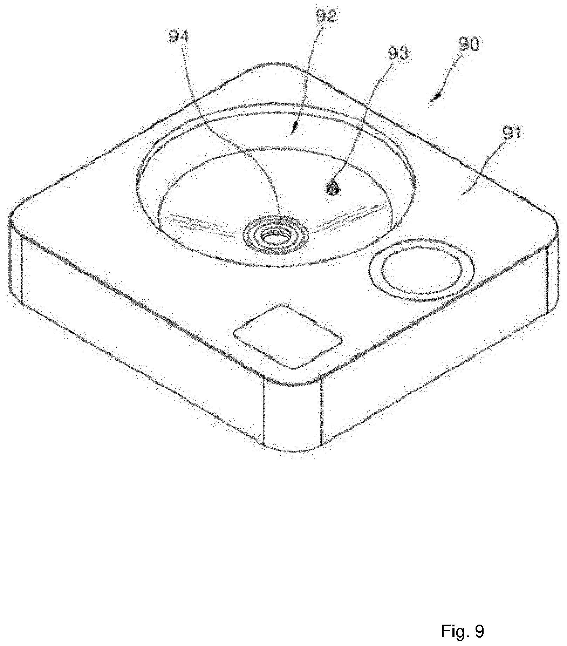

FIG. 9 is a perspective view illustrating the receiving portion 90 according to an embodiment of the present disclosure.

As illustrated in FIG. 9, the receiving portion 90 may be variously modified within the technical idea in which the receiving portion 90 supports the second driving portion 40 and is positioned at the lower side of the housing portion 25. The receiving portion 90 according to an embodiment of the present disclosure may include: a body portion 91 configured to support the second driving portion 40; a water collecting portion 92 formed with a groove portion that has a shape concaved downwardly from an upper portion of the body portion 91 facing the housing portion 25; and an injecting portion 93 installed at the body portion 91 and configured to inject water toward the inner portion 10 or the housing portion 25.

The body portion 91 is positioned at a lower side of the housing portion 25, and is connected to the lower side of the second driving portion 40. The water collecting portion 92 is formed to be concaved toward a center portion thereof, and a water draining portion 94 is installed at the center portion of the water collecting portion 92.

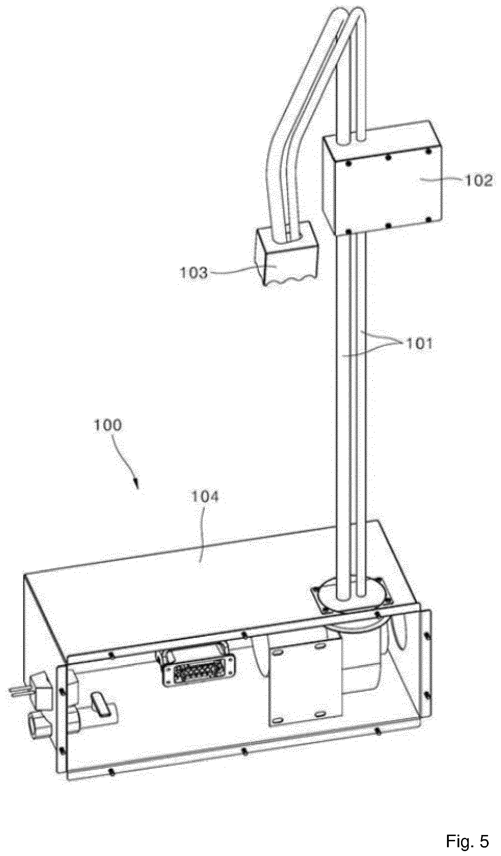

FIG. 5 is a perspective view illustrating the direct-firing portion 100 according to an embodiment of the present disclosure.

As illustrated in FIG. 5, the direct-firing portion 100 may be variously modified within the technical idea in which the food 300 existing at the inside of the inner portion 10 is heated by a flame. The direct-firing portion 100 according to an embodiment of the present disclosure may include: a direct-firing pipeline 101 configured to supply fuel gas toward the inner portion 10; and a valve portion 102 connected to the direct-firing pipeline 101 and configured to control a movement of the fuel gas.

In addition, an electrical component related to the direct-firing portion 100 is positioned inside a direct-firing base portion 104, and the fuel gas and the air are moved along the direct-firing pipeline 101 that extends to an upper side of the direct-firing base portion 104. The movement of the fuel gas and the air is controlled by the valve portion 102 that is installed at the direct-firing pipeline 101, and flame is injected through the nozzle portion 103 that is installed at an end portion of the direct-firing pipeline 101.

Hereinafter, an operation state of the cooking apparatus 1 according to an embodiment of the present disclosure will be described in detail with reference to the accompanying drawings.

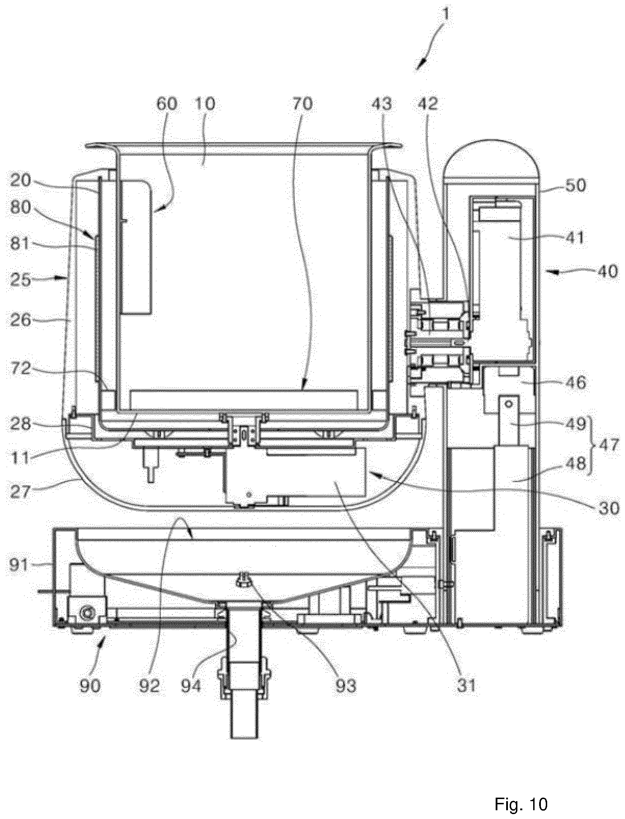

FIG. 10 is a cross-sectional view illustrating the cooking apparatus 1 according to an embodiment of the present disclosure. As illustrated in FIG. 1 and FIG. 10, when the food 300 is in a state of being contained in the inner portion 10, the first driving portion 30 is operated and the inner portion 10 is rotated. The first stirring portion 60 is rotated together with the inner portion 10, and the core member 71 of the second stirring portion 70 is in a state of being restrained from rotating so that the stirring of the food 300 is facilitated by the first stirring portion 60 and the second stirring portion 70.

In addition, when a direct-fired cooking is needed, the food 300 existing in the inner portion 10 is heated by flame generated through the nozzle portion 103.

After the food 300 has been cooked, the second motor member 41 is operated and rotates the housing portion 25 so that the food 300 is capable of being moved to another container by changing the inclination angle of the inner portion 10.

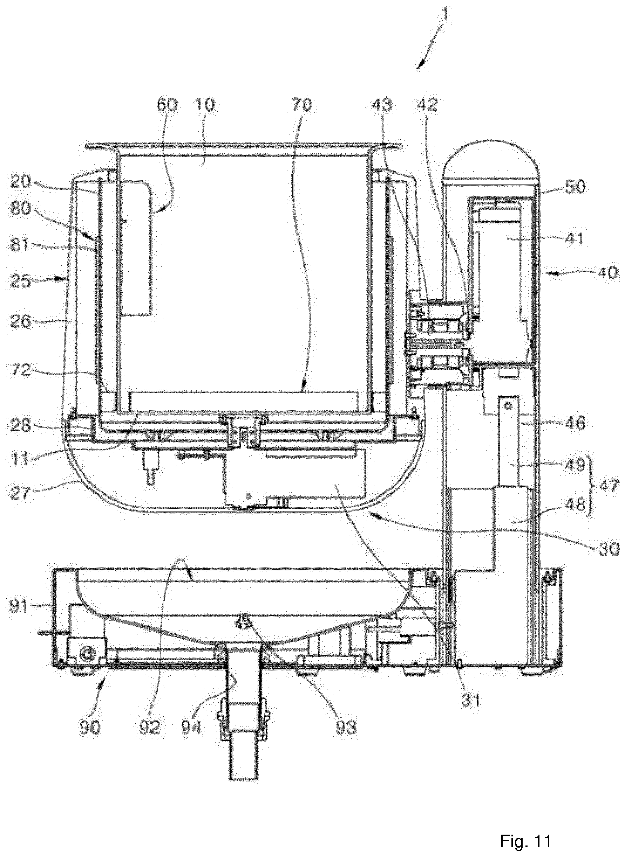

FIG. 11 is a cross-sectional view illustrating a state in which the inner portion 10 according to an embodiment of the present disclosure is moved upward.

As illustrated in FIGS. 10 and 11, when the entrance of the inner portion 10 is in a state of facing the upward, the inner support portion 46 moves upward together with the rod member 49 when the elevating portion 47 of the rod member 49 moves upward. Therefore, the power transmitting portion 43 and the housing portion 25 are also moved upward.

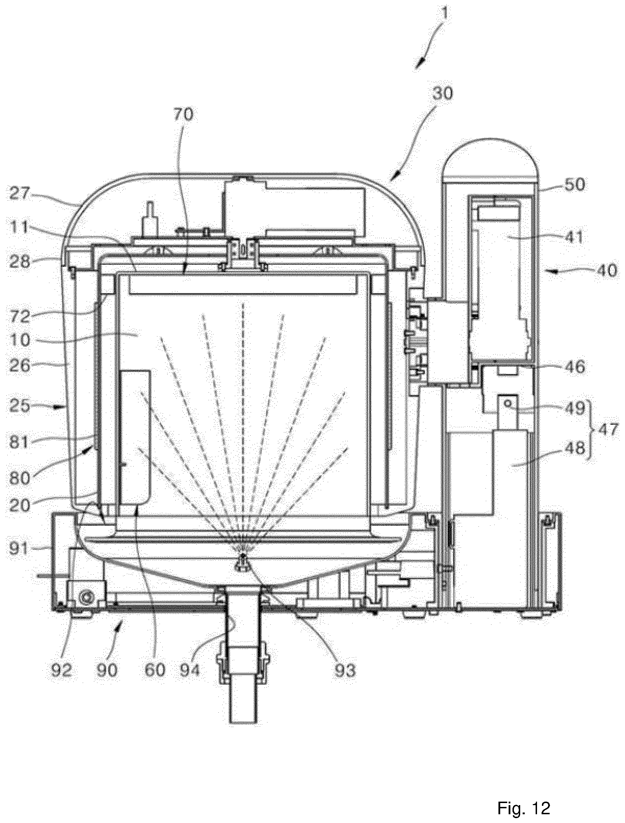

FIG. 12 is a cross-sectional view illustrating a state in which the inner portion 10 according to an embodiment of the present disclosure is cleaned.

As illustrated in FIG. 12, when the entrance of the inner portion 10 is in a state of facing downward by the second motor member 41 being operated, since the rod member 49 moves downward by the elevating portion 47 being operated, the inner portion 10 is also moved downward.

In addition, water injected from the injecting portion 93 cleans a remnant that has remained in the inner portion 10, and moves downward. Cleaning water moved along the water collecting portion 92 moves outside the body portion 91 through the water draining portion 94.

A temperature of the inner portion 10 is maintained high, and when pressure of water is injected from the injecting portion 93, contents attached to the inner portion 10 or oil attached to the inner portion 10 may be easily removed.

Hereinafter, another embodiment that the inner portion 200 of the present disclosure is installed in an oval shape will be described with reference to the accompanying drawings.

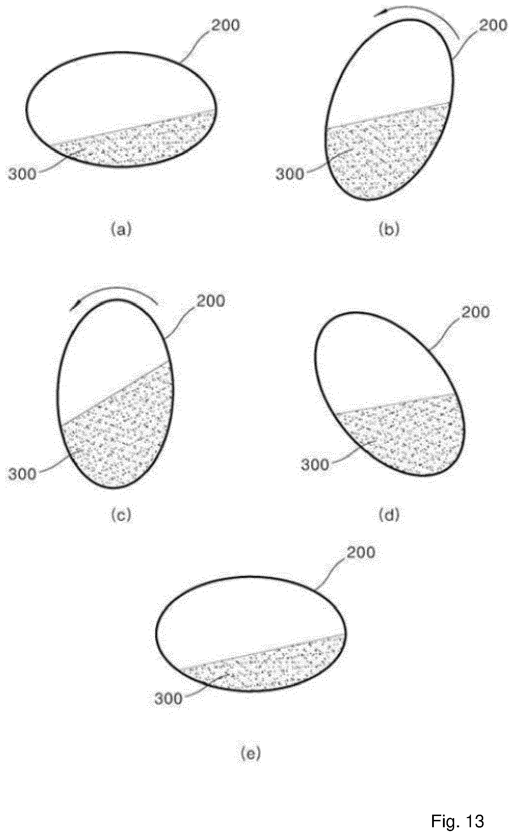

FIG. 13 shows plan views of rotating states of the inner portion 200 formed in an oval shape according to another embodiment of the present disclosure.

As illustrated in FIG. 13, the inner portion 200 according to another embodiment of the present disclosure has an oval cross-sectional shape.

When it is assumed that the inner portion 200 is rotated in a counter-clockwise direction, a height of contents positioned at a left side is relatively lower than a height of contents positioned at a right side so that the contents positioned at the right side flow down to the left side and are mixed. In other words, when rotating from a wide area of the floor to a narrow area of the floor, the contents positioned at a higher portion flow down to the left side and are in contact with an inner surface of the inner portion 200. Therefore, as the inner portion 200 is rotated, the food 300 is positioned at the bottom portion of the inner portion 200 so that the mixing of the food 300 may be more easily realized.

When the inner portion 200 has a circular cross-sectional shape, the food 300 positioned at a lower side continuously be in contact with the inner surface of the inner portion 200 so that the mixing does not occur well, and is only mixed by the first stirring portion 60 and the second stirring portion 70.

Therefore, when the inner portion 200 has the oval cross-sectional shape, the mixing of the food 300 may be more easily realized.

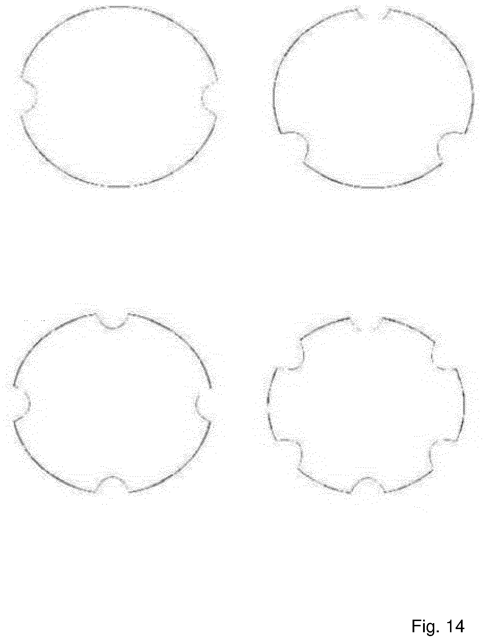

FIG. 14 shows plan views of the inner portion 200 formed with a plurality of protruding portions according to yet another embodiment of the present disclosure.

As described above, since the rotation and the inclination angle of the inner portion 10 and 200 are capable of being adjusted by using the first driving portion 30 and the second driving portion 40, a time and a cost for preparing the food 300 may be reduced since the food 300 is automatically heated by the heating portion 80 and the direct-firing portion 100. In addition, the food 300 is easily mixed by the first stirring portion 60 and the second stirring portion 70, and the inclination angle of the inner portion 10 and 200 is capable of being adjusted by using the second driving portion 40 so that various tastes of the food 300 may be prepared since the food 300 is mixed and stir-fried in various manners. In addition, since the cleaning of the inner portion 10 and 200 is automatically performed by the injecting portion 93, time and cost required to clean the inner portion 10 and 200 may be reduced.

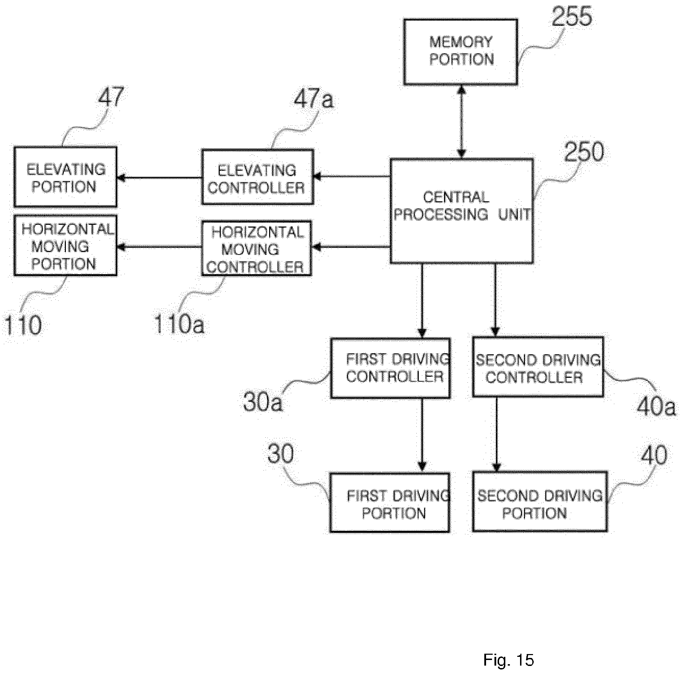

FIG. 15 is a block diagram illustrating a control configuration diagram of the present disclosure.

In the present disclosure, a central processing unit 250 is configured to control a movement of the first driving portion 30, the second driving portion 40, the elevating portion 47, and a horizontal moving portion 110.

In addition, a first driving controller 30a configured to control a rotation and a speed of the first motor member 31 exists at the first driving portion 30, and a second driving controller 40a configured to control a rotation, a rotation angle, and a rotation speed of the second motor member 41 exists at the second driving portion 40. Moreover, an elevating controller 47a configured to control an elevating power of a hydraulic pressure or a pneumatic pressure exists at the elevating portion 47, and a horizontal moving controller 110a configured to control a rotary motor that is configured to provide a power of a horizontal movement exists at the horizontal moving portion 110.

As described in the previous embodiment of the present disclosure, the first driving portion 30 drives the inner portion 10 to be rotated in the first direction A1, and the second driving portion 40 drives the housing portion 25 to be rotated in the second direction A2. In addition, the elevating portion 47 drives the inner support portion 46 to be vertically moved. Moreover, the horizontal moving portion 110 is a driving portion that is configured to allow the container support stand 120 to which the completely cooked food is added to be horizontally moved when that the completely cooked food is automatically discharged.

As a result, by an algorithm stored in a memory portion 255, the central processing unit 250 controls a rotation driving in the first direction A1, a rotation driving in the second direction A2, an elevation driving that generates the vertical movement, and a driving of the horizontal movement of the container support stand 120.

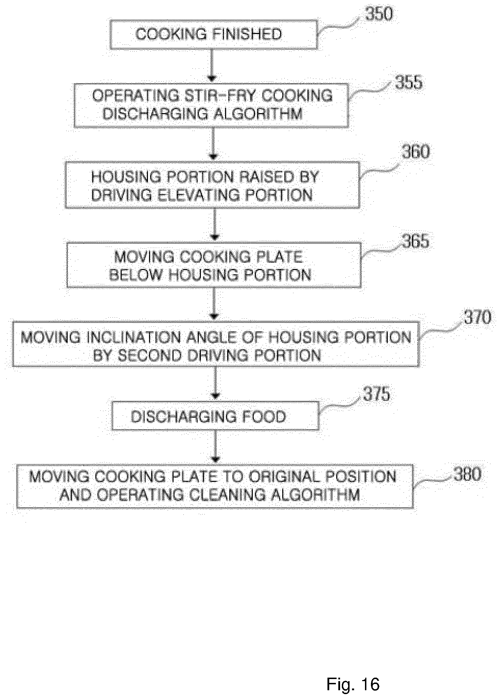

FIG. 16 is a flowchart illustrating a method of automatically discharging a cooked food from the cooking apparatus.

When the food is completely cooked by the control of the central processing unit 250, a cooking is finished, and the algorithm performing the cooking is finished. (step 350)

Then, the central processing unit 250 operates a stir-fried food discharging algorithm that discharges a stir-fried food cooked by the cooking apparatus of the present disclosure. (step 355)

By the elevating portion 37 that controls the elevating power in a hydraulic pressure manner or a pneumatic pressure manner, the housing portion 25 in which the food 300 is accommodated and the stir-fry cooking is performed is lifted upward. (step 360)

The container stand support 120 in which the food that cooking is finally completed is discharged is moved below the housing portion 25. By the control of the central processing unit 250 and the horizontal moving controller 110a, the horizontal moving portion 110 allows the container stand support 120 to perform a circular movement in a horizontal direction. (step 365)

In order for the completely cooked food accommodated in the inner portion 10 provided inside the housing portion 25 to be added to the container support stand 120, the housing portion 25 is rotated up to a predetermined angle by the second driving portion 40. (step 370)

When the completely cooked food is discharged to the container support stand 120, the container support stand 120 is moved to an original position thereof by the horizontal moving portion 110. Moreover, the cooking apparatus of the present disclosure performs a cleaning process. In order to perform the cleaning process, the central processing unit 250 operates a cleaning algorithm. (steps 375 to 380)

When after the step 360 that the housing portion 25 is lifted upward by the elevating portion 47 and the step that the container support stand 120 in which the discharged food is accommodated being moved below the housing portion 25 are simultaneously performed, the step 370 that the housing portion 25 is rotated up to the predetermined angle by the second driving portion 40 and the step that the container support stand 120 in which the discharged food is accommodated being moved below the housing portion 25 may be simultaneously performed.

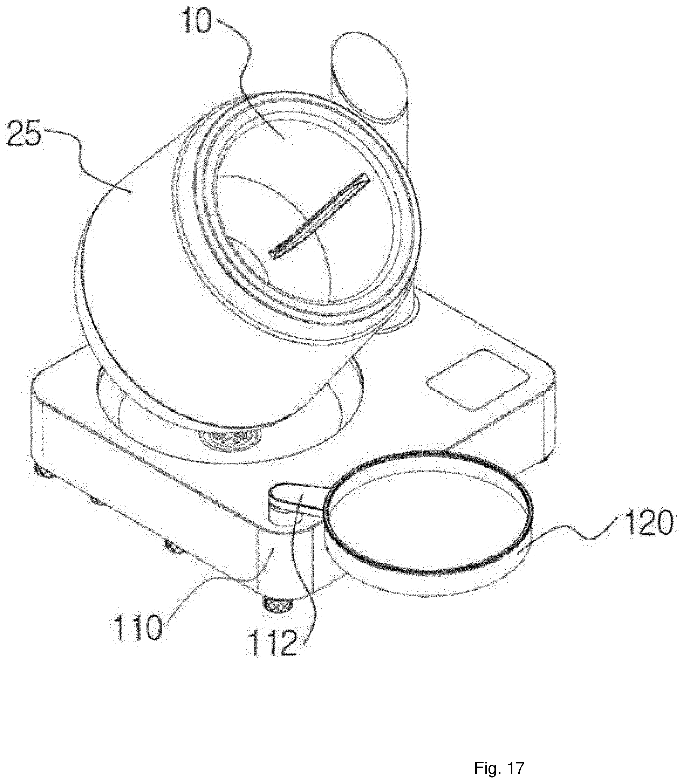

FIGS. 17 to 20 are views schematically illustrating that the housing portion 25 and the container support stand 120 that are included in the cooking apparatus are actually moved according to the flowchart in FIG. 17.

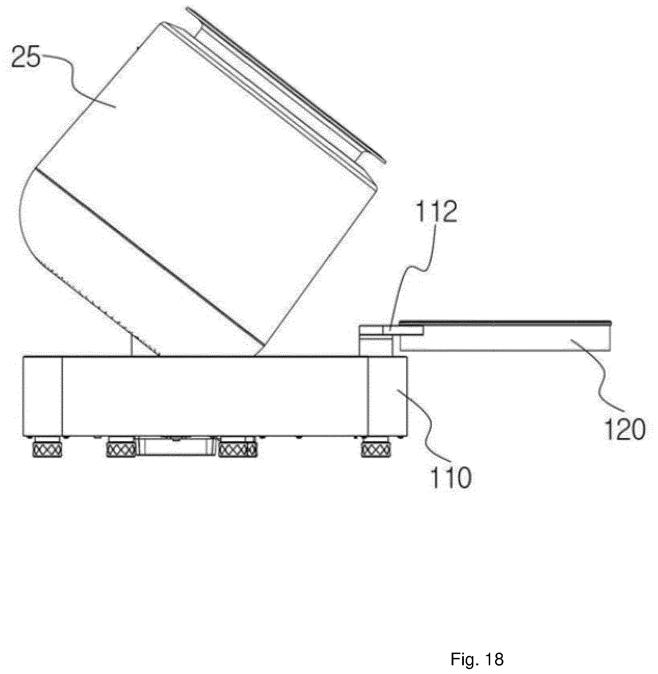

FIGS. 17 and 18 are views illustrating an embodiment of the present disclosure that the container support stand 120 is further provided in the cooking apparatus of the present disclosure, and FIG. 17 is a perspective view of the cooking apparatus of the present disclosure, and FIG. 18 is a side view of the cooking apparatus of the present disclosure. That is, the housing portion 25 provided with the inner portion 10 in which the food being cooked is accommodated performs a rotation movement while maintaining a predetermined angle so as to perform the cooking. Moreover, as described in an embodiment in FIG. 16, the container support stand 120 is a container having a shape of a container support stand in which the completely cooked food is discharged from the inner portion 10 and finally accommodated.

The container support stand 120 is connected to the horizontal moving portion 110 by a connecting arm 112, and the horizontal moving portion 110 provides a power that the container support stand 120 is horizontally moved via the connecting arm 112.

At this time, during the stir-fry cooking is performed by the inner portion 10 in the housing portion 25, the container support stand 120 is positioned outside an edge border of the receiving portion 90.

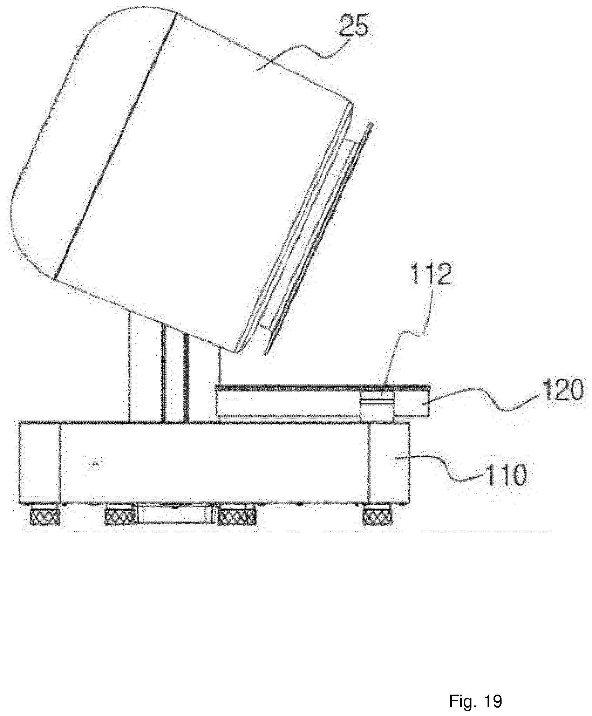

FIG. 19 is a side view illustrating a position to which the completely cooked food is discharged.

By the elevating portion 47 controlling the elevating power in the hydraulic pressure manner or the pneumatic pressure manner, the housing portion 25 in which the food 300 is accommodated and the stir-fry cooking is performed is lifted upward, and the container support stand 120 is moved below the housing portion 25. In addition, the housing portion 25 performs the rotation movement (rotation by the second driving portion 40) in an angle that the food 300 accommodated in the inner portion 10 is to be easily discharged from the container support stand 120.

As a result, due to the lift of the housing portion 25, the horizontal movement of the container support stand 120, and the rotation movement of the housing portion 25, a position to which the food 300 existing in the inner portion 10 in the housing portion 25 is discharged is formed.

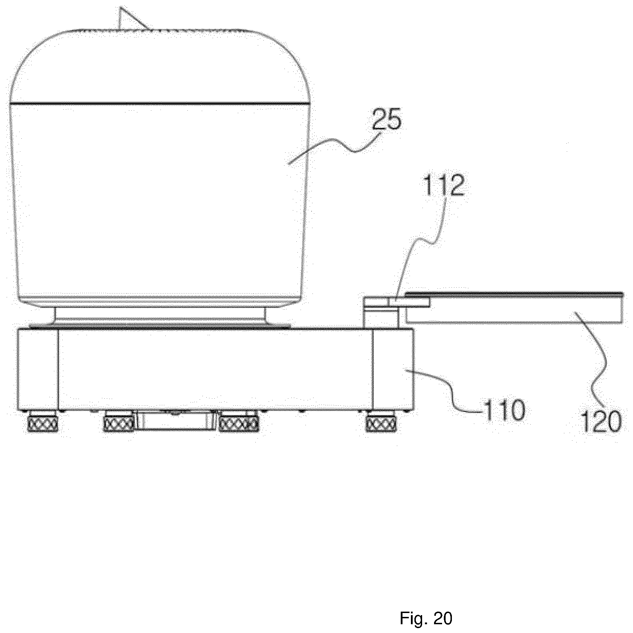

FIG. 20 is a side view illustrating the cooking apparatus after discharging of the completely cooked food is finished.

The container support stand 120 is moved to the original position thereof (the container support stand 120 is positioned to be outside the edge border of the receiving portion 90) by the horizontal movement, and the opening portion of the housing portion 25 is positioned to be in a state of facing downward so that the cleaning process is performed. In addition, the cleaning process is as described the previous embodiment of the present disclosure.

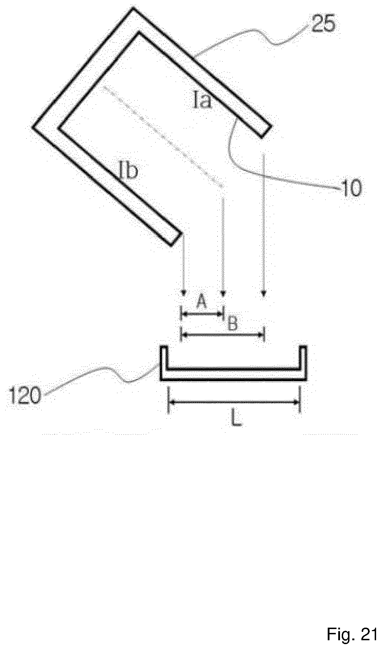

FIG. 21 is a view illustrating a size range of the container support stand 120 according to an embodiment of the present disclosure.

An angle of the housing portion 25 is inclined as the embodiment in FIG. 19 or FIG. 21, so that the completely cooked food (the food 300) is discharged outside the inner portion 10. At this time, a size of the container support stand 120 to which the food is discharged outside may be set.

When the housing portion 25 is in an inclined state such that the food is discharged, a diameter L of the container support stand 120 is formed to be longer than a distance (denoted by A in FIG. 21) between a line projecting vertically downward from an end portion of a lower inner side surface Ib of the housing portion 25 (the leftmost arrow among three vertical arrows in FIG. 21) and a line projecting vertically downward from an end portion of a center portion of the housing portion 25 (the centerline among three vertical arrows in FIG. 21).

In addition, when the housing portion 25 is in an inclined state such that the food is discharged, the diameter of the container support stand L is formed to be longer than a distance (denoted by B in FIG. 21) between the line projecting vertically downward from the end portion of the lower inner side surface Ib of the housing portion 25 (the leftmost arrow among three vertical arrows in FIG. 21) and a line projecting vertically downward from an end portion of an upper inner side surface Ia of the housing portion 25 (the rightmost arrow among three vertical arrows in FIG. 21).

At this time, since the food being discharged may be discharged outside the container support stand 120, the diameter L of the container support stand 120 is preferable to be 20 % longer than the two distances above described.

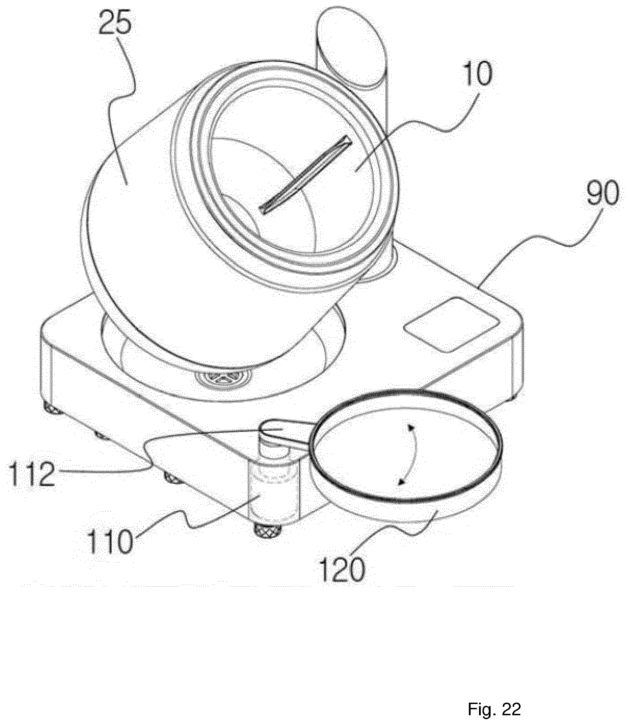

FIG. 22 is a view illustrating the horizontal moving portion 110 that allows the container support stand 120 to be horizontally moved.

By the control of the central processing unit 250 and the horizontal moving controller 110a, the horizontal moving portion 110 allows the container support stand 120 to perform the circular movement in the horizontal direction (rotated in a clockwise or counterclockwise direction with respect to the connecting arm 112 as a shaft). Then, power of the circular movement is provided by the horizontal moving portion 110. The horizontal moving portion 110 provides power of the rotation movement with supporting an end portion of the connecting arm 112, and as illustrated in a dotted line in FIG. 22, the horizontal moving portion 110 exists in a cylindrical shape and is positioned in an edge of the receiving portion 90.

By the control of the central processing unit 250 and the horizontal moving controller 110a, the horizontal moving portion 110 allows the container support stand 120 to perform the circular movement (direction of arrow illustrated in FIG. 22) in the horizontal direction. Then, the power of the circular movement is provided by the horizontal moving portion 110. The horizontal moving portion 110 provides power of the rotation movement with supporting an end portion of the connecting arm 112, and as illustrated in a dotted line in FIG. 22, the horizontal moving portion 110 exists in a cylindrical shape and is positioned at an edge of the receiving portion 90.

Of course, the horizontal movement occurred by the circular movement is an embodiment of the present disclosure, and such a rectilinear gear and so on may be provided at a lower portion of the container support stand 120 and a horizontal movement occurred by the rectilinear gear may be realized according to an embodiment of the present disclosure.

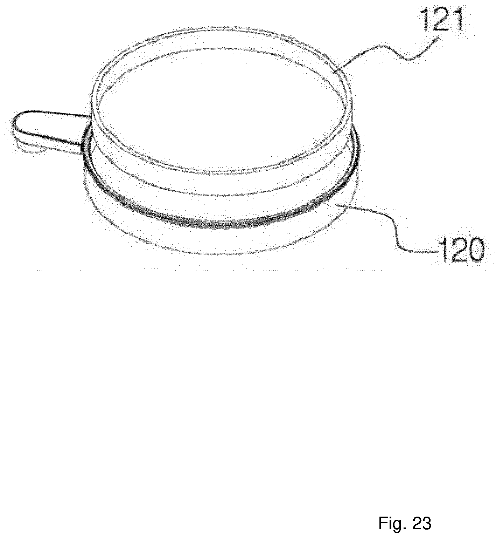

FIG. 23 is a view illustrating an inner container 121 according to an embodiment of the present disclosure.

FIG. 23 is a view illustrating the inner container 121 that is further included inside the container support stand 120 according to an embodiment of the present disclosure. When the stir-fried food that is discharged is accommodated in the container support stand 120, the stir-fried food is need to be carried and accommodated in such an actually used plate and so on. Therefore, by separating the inner container 121 in which the food is actually accommodated, the food is capable of being carried and accommodated in the actually used plate.

As described above, the present disclosure is described with reference to the drawings. However, the present disclosure is not limited by the embodiments and drawings disclosed in the present specification. It will be apparent that various modifications may be made thereto by those skilled in the art within the scope of the present disclosure. Furthermore, although the effect resulting from the features of the present disclosure has not been explicitly described in the description of the embodiments of the present disclosure, it is obvious that a predictable effect resulting from the features of the present disclosure should be recognized.

## Claims

1. A cooking apparatus comprising:
an inner portion in which a food is contained and heated;
an outer portion installed in a shape that surrounds an outside of the inner portion;
a heating portion configured to heat the inner portion by using electrical energy;
a housing portion installed in a shape that surrounds both the heating portion and the outer portion;
a first driving portion positioned between the outer portion and the housing portion, and configured to rotate the inner portion in a first direction; and
a second driving portion positioned outside the housing portion and configured to rotate the housing portion in a second direction,
wherein the second driving portion comprises:
a second motor member installed in a position spaced apart from the housing portion, and configured to convert electrical energy to rotational power;
a power transmitting portion connecting a second output shaft to the housing portion;
an inner support portion configured to support the second motor member; and
an elevating portion configured to raise and lower the inner support portion,
wherein the housing portion that receives the rotational power of the second motor member is rotated in the second direction,
wherein the cooking apparatus further comprises a container support stand in which the food contained the inner portion is discharged and contained, and further provided with a horizontal moving portion configured to horizontally move the container support stand, so that the horizontal moving portion moves the container support stand to be positioned to a position to which the food that is discharged is contained when cooking of the food is completed.

2. The cooking apparatus of claim 1, further comprising a central processing unit configured to control a driving of the cooking apparatus and to control a movement of the container support stand,
wherein, when the cooking of the food is finished, the central processing unit finishes an algorithm of performing a stir-fry cooking and performs an algorithm of discharging the food that is food that has been cooked and contained in the inner portion.

3. The cooking apparatus of claim 2, wherein the elevating portion comprises:
an elevating body positioned at a lower side of the inner support portion and configured to generate power; and
a rod member that protrudes to an upper side of the elevating body and is connected to the inner support portion, and configured to be moved in a vertical direction by a movement of the elevating body,
wherein, when the algorithm of discharging the food is performed by the central processing unit, the elevating portion raises the housing portion.

4. The cooking apparatus of claim 2, wherein, when the algorithm of discharging the food is performed by the central processing unit, the second driving portion rotates the housing portion so that the housing portion faces a position to which the completely cooked food is discharged.

5. The cooking apparatus of claim 4, wherein, when the housing portion is in an inclined state such that the food is discharged, a diameter (L) of the container support stand is longer than a distance between a line projecting vertically downward from an end portion of a lower inner side surface of the housing portion and a line projecting vertically downward from an end portion of a center portion of the housing portion.

6. The cooking apparatus of claim 2, wherein, when performing of the algorithm of discharging the food that is food that has been cooked and contained in the inner portion is finished, cleaning of the inner portion of the cooking apparatus is performed.

7. The cooking apparatus of claim 2, further comprising an inner container provided inside the container support stand, thereby capable of separating the inner container from the container support stand.

8. The cooking apparatus of claim 2, further comprising a connecting arm connecting the horizontal moving portion and the container support stand,
wherein the horizontal moving portion is configured to provide power of a rotation movement and to horizontally move the container support stand via the connecting arm.

9. The cooking apparatus of claim 2, further comprising a receiving portion supporting the second driving portion and positioned at a lower side of the housing portion,
wherein, when the discharging of the completely cooked food is completed, the container support stand is moved to an original position thereof by a control of the central processing unit and by driving the horizontal moving portion, and the original position of the container support stand is an outside of a border line of the receiving portion.

10. The cooking apparatus of claim 2, wherein, when the food is completely cooked and discharging of the food begins, a step that the housing portion is raised upward by the elevating portion and a step that the container support stand in which the discharged food is contained is moved below the housing portion are simultaneously performed, and then a step that the housing portion is rotated up to a predetermined angle by the second driving portion and the step that the container support stand in which the discharged food is contained is moved below the housing portion are simultaneously performed.
